# EUROPÄISCHE PATENTANMELDUNG

(11) **EP 2 080 718 A1**
(43) Veröffentlichungstag der Anmeldung: **22.07.2009**
(21) Anmeldenummer: 08100470.7
(22) Anmeldetag: 15.01.2008
(51) Int. Cl.: B65G 1/04

(54) **Regallager**

(71) Anmelder: HERRENKNECHT AKTIENGESELLSCHAFT, 77963 Schwanau (DE)
(72) Erfinder: Mahn, Ralf, 77855 Achern (DE)
(74) Vertreter: Bohest AG

(57) **Zusammenfassung**

Ein Regallager umfasst eine Vielzahl von horizontalen Regalfächern (22) zum Lagern eines Guts und ein verfahrbares Regalbediengerät (3) zum Befüllen der Regalfächer (22) mit dem zu lagernden Gut (P) und/oder zur Entnahme des gelagerten Guts (P) aus den Regalfächern (22). Das Regallager umfasst einen unterirdischen vertikalen Schacht (1), in welchem die horizontal angeordneten Regalfächer (22) sowie das Regalbediengerät (3) vorgesehen sind.

## Beschreibung

Die Erfindung betrifft ein Regallager gemäss dem Oberbegriff des unabhängigen Patentanspruchs.

In verschiedenen Produktionsstätten ist eine grössere Lagerhaltung von zu verarbeitenden Gütern erforderlich. So ist dies beispielsweise, aber nicht ausschliesslich, bei metallverarbeitenden Betrieben, bei denen Bleche mit Hilfe von Laserschneidmaschinen zugeschnitten werden, der Fall. Da die Laserschneidmaschinen ausserordentlich teure Maschinen sind, muss eine weitgehend unterbrechungsfreie Auslastung der Laserschneidmaschinen erfolgen, was eine Lagerhaltung vor Ort in nicht unerheblichem Umfang erfordert.

Bisherige Regallager, die hier zum Einsatz kommen, sind sogenannte Hochregallager. Dabei handelt es sich um solche Regallager, die in einem Gebäude wie z.B. einer Halle, installiert sind, und die eine Vielzahl von übereinander und nebeneinander angeordneten Regalfächern aufweisen, in denen das jeweilige zu lagernde Gut, z.B. die genannten zu verarbeitenden Bleche, gelagert werden. Entlang eines solchen Hochregallagers verlaufen typischerweise eine oder mehrere Schienen im Boden, entlang denen ein automatisches Regalbediengerät horizontal verfahren werden kann. Das Regalbediengerät ist höhenverstellbar und auch horizontal verstellbar, sodass es auf die Höhe des jeweiligen Regalfachs, in welchem das gewünschte Gut, z.B. das Blech, gelagert ist, verfahrbar ist und dann anschliessend in das jeweilige Regalfach hinein und wieder heraus verfahrbar ist, um das gewünschte Gut aus dem Regalfach entnehmen zu können.

Wenngleich solche Hochregallager sich in erheblichem Umfang etabliert haben, so weisen sie doch eine ganze Menge von teilweise nicht unerheblichen Nachteilen auf, von denen nachfolgend nur einige erörtert werden sollen. Als erstes wäre dabei der Flächenverbrauch zu nennen, der bei hohen Grundstückspreisen zu erheblichen Kosten für eine solches Hochregallager mit zugehöriger Lagerhalle führt. Auch die Stahlbaukosten für ein solches Hochregallager sind ganz erheblich. Weiterhin müssen die Schienen für das Regalbediengerät im Hallenboden untergossen sein, damit eine sichere Verfahrbarkeit des Regalbediengeräts entlang des Regals möglich ist. Weiterhin ist der Betrieb solcher Hochregallager auch akustisch sehr störend (Lärm).

Im Falle des zuvor genannten metallverarbeitenden Betriebs mit den Laserschneidmaschinen sind ausserdem die Laserschneidmaschinen typischerweise räumlich nahe zu den Hochregallagern in der gleichen Halle installiert, um möglichst kurze Materialwege zu haben, um die Maschinen so gut wie möglich auslasten zu können. Ausser dass solche Hochregallager nicht besonders ästhetisch sind und in Betrieben mit derart teuren Maschinen ästhetisch als "störend" empfunden werden, hat die Bewirtschaftung der Regale auch Störungen der Maschinen zur Folge, die beispielsweise durch die Fahrerschütterungen des Regalbediengeräts hervorgerufen werden, was gerade bei Präzisionsschneidevorgängen unerwünscht ist. Ausserdem kommt es bei herkömmlichen Hochregallagern immer wieder zu sogenannten "Crashes" des Regalbediengeräts, die beispielsweise dadurch hervorgerufen werden können, dass bedingt durch Erschütterungen bei der Betätigung des Regalbediengeräts Bleche herabfallen oder auf dem Regalbediengerät verrutschen können. Solche "Crashes" haben Unterbrechungen der Materialzufuhr zur Folge und führen damit zu Maschinenstillstand.

Durch die zum Teil sehr grosse Bauhöhe von Hochregallagern kann es ausserdem zu Positionierungenauigkeiten des Regalbediengeräts vor den einzelnen Regalfächern kommen. Weiterhin sind auch Motoren für die Längsfahrt des Regalbediengeräts auf der Schiene bzw. auf den Schienen erforderlich, was einen nicht unerheblichen Energieverbrauch zusätzlich zu der Energie für die Hub- und Senkbewegung und die horizontale Bewegung des Regalbediengeräts in die Fächer hinein bzw. heraus bedeutet.

Es ist daher eine Aufgabe der Erfindung, ein Regallager vorzuschlagen, welches die vorstehend genannten Nachteile nicht oder nur in wesentlich geringerem Umfang aufweist.

Diese Aufgabe wird erfindungsgemäss durch ein Regallager gelöst, wie es durch die Merkmale des unabhängigen Patentanspruchs charakterisiert ist. Vorteilhafte Weiterbildungen des erfindungsgemässen Regallagers sind Gegenstand der abhängigen Patentansprüche.

Insbesondere umfasst das erfindungsgemässe Regallager eine Vielzahl von horizontalen Lagerfächern zum Lagern eines Guts und ein verfahrbares Regalbediengerät zum Befüllen der Regalfächer mit dem zu lagernden Gut und/oder zur Entnahme des gelagerten Guts aus den Regalfächern. Das erfindungsgemässe Regallager umfasst ferner einen unterirdischen vertikalen Schacht, in welchem die horizontal angeordneten Regalfächer sowie das Regalbediengerät vorgesehen sind.

Durch den unterirdischen Schacht ist zunächst einmal der (oberirdische) Flächenverbrauch gegenüber dem herkömmlichen Hochregallager ausserordentlich gering. Schienen für die Längsverfahrbarkeit des Regalbediengeräts sind bei dem erfindungsgemässen Regallager obsolet, sodass auch Energie, die für das Längsverfahren des Regalbediengerät entlang des Hochregals bei konventionellen Hochregallagern anfällt, eingespart werden kann. Auch die akustische Belastung (Lärm) ist bei dem erfindungsgemässen unterirdischen Regallager (Schachtlager) erheblich reduziert, da sie allenfalls unterirdisch auftritt. Bei dem oben erörterten Einsatz des Hochregallagers im Zusammenhang mit Laserschneidmaschinen sind auch die räumlichen Materialwege vom Regallager zu der Laserschneidmaschine vergleichsweise kurz. Da das Regallager unterirdisch ist, ist auch der ästhetische Aspekt gelöst. Störungen durch Erschütterungen, wie sie bei einem oberirdischen Hochregallager auftreten können (siehe weiter oben), sind ebenfalls eliminiert. Auch die eingangs genannten "Crashes" des Regalbediengeräts entfallen, weil bei dem erfindungsgemässen Regallager die Erschütterungen bei einem Längsverfahren des Regalbediengeräts entfallen und somit kein Herabfallen oder Verrutschen von Blechen vom Regalbediengerät oder Verschieben von Blechen auf dem Regalbediengerät auftritt. Somit sind auch die dadurch bei den herkömmlichen Hochregallagern hervorgerufenen Unterbrechungen der Materialzufuhr bei dem erfindungsgemässen Regallager nicht vorhanden. Auch allfällige Positionierungenauigkeiten des Regalbediengeräts vor den einzelnen Regalfächern werden eliminiert bzw. verringert. Schliesslich entfällt bei dem erfindungsgemässen Lager, wie bereits erwähnt, ein Motor für die Längsverfahrbarkeit des Regalbediengeräts, weil ja lediglich eine Hub- bzw. Senkbewegung des Regalbediengeräts erforderlich ist.

Bei einem vorteilhaften Ausführungsbeispiel des erfindungsgemässen Regallagers sind in dem unterirdischen Schacht zwei Regalblöcke von übereinander angeordneten Regalfächern vorgesehen, wobei die beiden Regalblöcken einander gegenüberliegend angeordnet sind. In einer Weiterbildung dieses Ausführungsbeispiels ist das Regalbediengerät derart ausgebildet, dass es lediglich eine vertikale Hub- und Senkbewegung ausführen kann und Mittel zum horizontalen Transport des Guts in ein Regalfach hinein bzw. aus dem Regalfach hinaus umfasst. Das vereinfacht die konstruktive Ausführung des Regalbediengeräts, da es nur eine Hub- und Senkbewegung ausführen können muss und das zu transportierende Gut jeweils in einer einzigen horizontalen Richtung in das Regalfach hinein bzw. aus diesem heraus befördern können muss, dies bei gleichzeitig guter Ausnutzung des Innenraums des Schachts.

Bei einem weiteren Ausführungsbeispiel des erfindungsgemässen Regallagers ist die Schachtöffnung mit Ausnahme eines zentralen Bereichs, in welchem das Regalbediengerät angeordnet ist, mit einer ebenerdigen Abdeckung abgedeckt. Diese ebenerdige Abdeckung kann drehbar ausgebildet sein, damit dann, wenn das aus dem Regalfach auf einer Palette aufliegende Blech von dem Regalbediengerät nach oben transportiert worden ist, mitsamt der Palette auf der Abdeckung abgelegt werden kann, welche dann in einer beliebigen azimutalen (Winkel)-Position übergeben werden kann. Im zentralen Bereich (dort, wo das Regalbediengerät im Schacht angeordnet ist) ist eine separate Abdeckung vorgesehen, welche in geringem Abstand oberhalb der Schachtöffnung angeordnet ist und den zentralen Bereich des überdeckt. Das ist deshalb wichtig, weil die Ladung (z.B. eine Palette, auf der die von dem Laserschneidgerät zu bearbeitenden Bleche liegen), zumindest bis knapp oberhalb der Schachtöffnung heraus transportiert werden muss, damit sie dann ebenerdig oder knapp darüber übergeben werden kann. Andererseits soll die separate Abdeckung auch nicht zu hoch oberhalb des ebenerdigen Levels angeordnet sein, um das Risiko zu verringern, dass Gegenstände in den Schacht hinein fallen können oder gar Personen in Gefahr geraten könnten, in den Schacht zu fallen.

Bei einem weiteren Ausführungsbeispiel des erfindungsgemässen Regallagers weist der Schacht eine Schachttiefe von bis zu 85 m auf. Vorzugsweise liegt die Schachttiefe im Bereich von etwa 30-85 m. Einerseits muss nämlich die Zugriffszeit auf die einzelnen Regalfächer in einem vernünftigen Rahmen liegen, andererseits muss auch das Regallager eine hinreichende Lagerkapazität aufweisen, damit sich die Erstellung eines derartigen Lagers (Schachtlagers) auch wirtschaftlich lohnt.

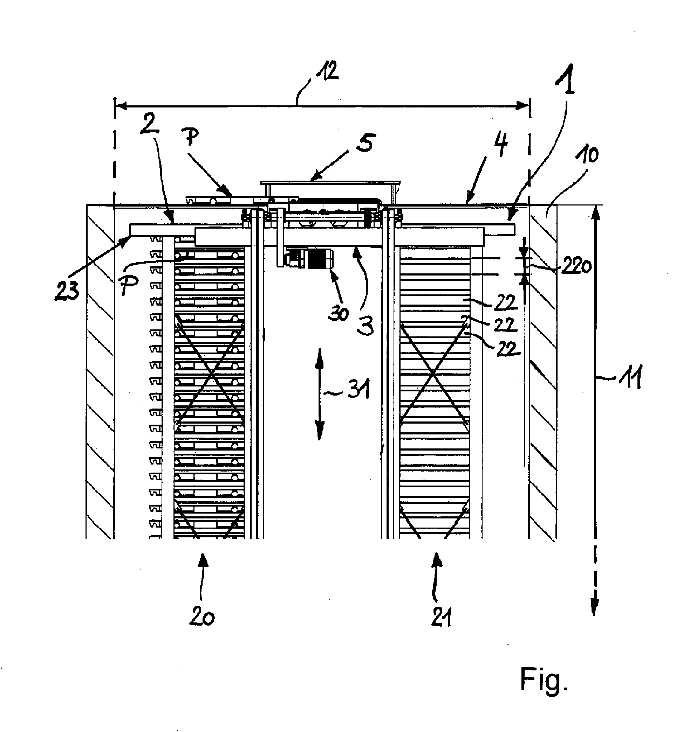

Weitere vorteilhafte Aspekte ergeben sich aus der nachfolgenden Beschreibung eines Ausführungsbeispiels des erfindungsgemässen Regallagers mit Hilfe der Zeichnung.

Die einzige Zeichnungsfigur zeigt dabei schematisch einen Schnitt durch ein erfindungsgemässes Schachtlager, wie es beispielsweise bei metallverarbeitenden Betrieben mit Laserschneidegeräten zur Anwendung kommen könnte, wobei die Anwendung des erfindungsgemässen Regallagers keineswegs auf diese Anwendung beschränkt ist.

In dem in der Figur gezeigten Ausführungsbeispiel des erfindungsgemässen unterirdischen Regallagers, welches im folgenden als "Schachtlager" bezeichnet wird, erkennt man einen Schacht 1 mit einer kreiszylindrischen Schachtwand 10, die durch Beton-Tübbinge gebildet werden kann. Im Schacht 1 ist ein Regal 2 vorgesehen, welches zwei Regalblöcke 20 und 21 von übereinander angeordneten horizontalen Lagerfächern 22 umfasst, in denen das Gut, beispielsweise die eingangs angesprochenen Bleche, auf Paletten gelagert werden kann. In dem rechts dargestellten Regalblock 21 erkennt man die leeren Lagerfächer 22, die einen vorgebbaren Rasterabstand 220 voneinander haben können, während in dem links dargestellten Regalblock 20 Paletten P schematisch angedeutet sind. Das Regal 2 ist mit Hilfe von Stahlträgern 23 an den BetonTübbingen befestigt, sodass die Krafteinleitung in die Schachtwand 10 erfolgen kann.

Weiterhin erkennt man ein Regalbediengerät 3 mit einem Hubmotor 30 welches in Richtung der Pfeile 31 entlang der Schienen 32 aufwärts und abwärts im Schacht verfahrbar ist, und ausserdem noch Mittel aufweist, welche in der Lage sind, den horizontalen Transport des Guts (z.B. der Palette P) in ein Regalfach hinein bzw. aus dem Regalfach hinaus zu bewirken. Bei dem gezeigten Ausführungsbeispiel ist es beispielsweise denkbar, dass das Regalbediengerät 3 mit umlaufenden Ketten versehen ist, die einen Mitnehmer aufweisen, der in entsprechende Ösen an der Palette P eingreift und dadurch die Palette P entweder in das Regalfach 22 hinein oder aus dem Regalfach schiebt bzw. zieht. Andere hierzu geeignete Mittel sind allerdings ebenfalls ohne weiteres denkbar.

Weiterhin ist die Schachtöffnung, die am oberen Ende der Schachtwand 10 gebildet wird, durch eine ebenerdige Abdeckung 4 abgedeckt mit Ausnahme eines zentralen Bereichs, in welchem das Regalbediengerät 3 angeordnet ist. Dort muss nämlich das zu lagernde Gut, im beschriebenen Beispiel die auf der Palette P gelagerten Bleche, z.B. an eine Transporteinrichtung (nicht dargestellt) bzw. an die Laserschneidmaschine übergeben werden können, weshalb die Palette P im zentralen Bereich mindestens auf ebenerdigen Level angehoben werden muss.

Damit dennoch nicht die Gefahr besteht, dass Gegenstände in den Schacht 1 hineinfallen können bzw. gar Personen einer solchen Gefahr ausgesetzt sind, ist im zentralen Bereich eine separate Abdeckung 5 vorgesehen, welche in geringem Abstand oberhalb der Schachtöffnung angeordnet ist und den Bereich des Regalbediengeräts 3 überdeckt. Auf diese Weise kann sichergestellt werden, dass einerseits die Paletten P ebenerdig oder auf einem etwas darüber liegenden Level übergeben werden können, andererseits dennoch die zuvor beschriebenen Gefahren praktisch eliminiert sind.

Die ebenerdige Abdeckung 4 kann drehbar ausgebildet sein, sodass die Palette P mit den Blechen - nachdem sie vom Regalbediengerät 3 an die Abdeckung 4 übergeben worden ist, durch Drehen der ebenerdigen Abdeckung an einer beliebigen azimutalen Winkelposition (also an einer beliebigen Winkelposition in der Ebene der Abdeckung 4) weiter übergeben werden kann, je nachdem wie die jeweiligen Gegebenheiten vor Ort dies erfordern.

Der Schacht 1 kann typischerweise eine Schachttiefe 11 im Bereich von bis zu 85 m aufweisen. Eine Schachttiefe 11 von 85 m erlaubt noch eine vernünftige Zugriffszeit auf das in den Lagerfächern 22 gelagerte Gut (z.B. die Paletten P mit den Blechen). Typische Schachttiefen können im Bereich von etwa 30-85 m liegen, wobei je nach Einsatzgebiet und erforderlicher Zugriffszeit auch andere Schachttiefen möglich sind. Der Schachtinnendurchmesser 12 kann beispielsweise im Bereich von 4.5-9 m liegen. Für den beschriebenen Fall mit den Paletten P, auf denen Bleche gelagert werden, kann das Fachrastermass 220 etwa 180-500 mm betragen, aber auch hier gilt, dass die genannten Abmessungen jeweils nur beispielhaft zu betrachten sind und je nach Einsatzgebiet variieren können. Ein typischer Abstand der separaten Abdeckung 5 kann beispielsweise etwa 30 cm über dem ebenerdigen Level sein, auch dies ist - wie bereits gesagt - beispielhaft zu betrachten.

Als Vorteile eines solchen Schachtlagers lassen sich also insbesondere auch noch festhalten: Geringe Stahlbaukosten, ein vergleichsweise geringerer Montageaufwand als bei konventionellen oberirdischen Hochregallagern, keine aufwändige Schutzzauneinhausung des Lagers, keine aufwändigen Absicherungsmassnahmen wie z.B. Rolltore mit entsprechender Sensorik bei Hochregallagern, keine Brandschutztore erforderlich auch bei der Lagerung von brennbarem Lagergut, eine relativ konstante Betriebstemperatur für das Regalbediengerät, was zu einer geringeren Problematik für die Sensorik eines solchen Geräts führt, kein Wälzlagerversagen bei höheren Temperaturen unter einem Hallendach wie bei konventionellen Hochregallagern, keine verstärkte Bodenplatte oder Hallenerweiterung erforderlich, sowie ein ansprechendes "ästhetisches" Bild.

## Patentansprüche

1. Regallager mit einer Vielzahl von horizontalen Regalfächern (22) zum Lagern eines Guts und einem verfahrbaren Regalbediengerät (3) zum Befüllen der Regalfächer (22) mit dem zu lagernden Gut (P) und/oder zur Entnahme des gelagerten Guts (P) aus den Regalfächern (22), **dadurch gekennzeichnet, dass** das Regallager einen unterirdischen vertikalen Schacht (1) umfasst, in welchem die horizontal angeordneten Regalfächer (22) sowie das Regalbediengerät (3) vorgesehen sind.

2. Regallager nach Anspruch 1, bei welchem in dem unterirdischen Schacht zwei Regalblöcke (20,21) von übereinander angeordneten Lagerfächern (22) vorgesehen sind, wobei die beiden Regalblöcke (20,21) einander gegenüberliegend angeordnet sind.

3. Regallager nach Anspruch 2, bei welchem das Regalbediengerät (3) derart ausgebildet ist, dass es lediglich eine vertikale Hub- und Senkbewegung ausführen kann und Mittel zum horizontalen Transport des Guts (P) in ein Regalfach (22) hinein bzw. aus dem Regalfach (22) hinaus umfasst.

4. Regallager nach einem der vorangehenden Ansprüche, bei welchem die Schachtöffnung mit Ausnahme eines zentralen Bereichs, in welchem das Regalbediengerät (3) angeordnet ist, mit einer ebenerdigen Abdeckung (4) abgedeckt ist, und bei welchem im zentralen Bereich eine separate Abdeckung (5) vorgesehen ist, welche in geringem Abstand oberhalb der Schachtöffnung angeordnet ist und den Bereich des Regalbediengeräts (3) überdeckt.

5. Regallager nach einem der vorangehenden Ansprüche, bei welchem der Schacht (1) eine Schachttiefe (11) von bis zu 85 m aufweist.
